# EUROPÄISCHE PATENTSCHRIFT

(11) **EP 0 487 926 B1**
(45) Veröffentlichungstag und Bekanntmachung des Hinweises auf die Patenterteilung: **01.03.1995**
(21) Anmeldenummer: 91118587.4
(22) Anmeldetag: 31.10.1991
(51) Int. Cl.: B23B 31/107, B23B 31/22

(54) **Motorisch betriebenes Werkzeug**
Motor driven tool
Outil motorisé

(30) Priorität: 28.11.1990 DE 4037791
(43) Veröffentlichungstag der Anmeldung: 03.06.1992
(73) Patentinhaber: C. & E. FEIN GmbH & Co., D-70176 Stuttgart (DE)
(72) Erfinder: Schreiber, Wolfgang, W-7000 Stuttgart 75 (DE)
(74) Vertreter: Witte, Alexander, Dr.-Ing.

(56) Entgegenhaltungen:
- EP-A- 0 265 380
- DE-U- 8 901 367
- FR-A- 1 424 002
- US-A- 4 209 182

## Beschreibung

Die Erfindung betrifft ein motorisch betriebenes Werkzeug mit einem um eine Achse rotierenden Bohrfutter mit einem eine Antriebsspindel enthaltenden Werkzeugkopf, wobei die Antriebsspindel eine Mitnahmeöffnung für einen Antriebsschaft des Werkzeugeinsatzes sowie Rastmittel zum axialen Verrasten des Antriebsschaftes in der Mitnahmeöffnung aufweist, die beim Einführen des Antriebsschaftes die Mitnahmeöffnung vorzugsweise selbsttätig verrasten und mittels eines Mechanismus lösbar sind.

Ein Werkzeug der vorstehend genannten Art ist Typ 110 02, Typ ASsm 315b und c und die betreffenden Prospekte "Akkn-Schrauber + Bohrer" und "FEIN accu-tec Schrauber und Ladesystem" aus 1987 und 1989 ist durch die Akkn-Schrauber der Anmelderin bekannt. Ferner sie auf die FR-A-1424002 verwiesen, die ein solches Werkzeug zeigt.

Das bekannte Werkzeug kann alternativ mit einem Schraubereinsatz oder mit einem Bohrfutter bestückt werden. Der Schraubereinsatz ist dabei lediglich als kurzes Profilstück ausgebildet, dessen rückwärtiges Ende an das Profil der Mitnahmeöffnung angepaßt ist, beispielsweise in Form eines Sechskantes, während sein vorderes Ende eine Schneide oder eine Krone zum Drehen von Schlitzschrauben oder Kreuzschlitzschrauben trägt. Das Bohrfutter ist hingegen als herkömmliches Bohrfutter ausgebildet, das an seinem rückwärtigen Ende lediglich anstelle eines Schraubzapfens ebenfalls mit einem profilierten Schaft versehen ist, der an die Innenkontur der Mitnahmeöffnung angepaßt ist.

Bei dem bekannten Werkzeug erstreckt sich die Antriebsspindel nach vorne aus dem Werkzeugkopf heraus. Auf dem vorstehenden Ende der Antriebsspindel ist eine axial verschiebbare Hülse angeordnet. Im Verschiebebereich der Hülse ist die Antriebsspindel als Kugelkäfig ausgebildet. Wenn die Hülse gegen die Kraft einer Feder in eine erste Endstellung axial verschoben wird, so treten die Kugeln des Kugelkäfigs infolge einer entsprechenden Innenprofilierung der Hülse in den Kugelkäfig ein und geben damit die Mitnahmeöffnung frei. Wenn hingegen die Hülse losgelassen wird und sich unter der Rückstellkraft der Feder in ihre andere Endstellung bewegt, so werden die Kugeln nach innen eingedrückt und stehen über das Innenprofil der Mitnahmeöffnung radial vor. In komplementärer Weise hierzu ist das Schrauber-Profilstück oder der Schaft des Bohrfutters mit einer Ringnut versehen, in die die Kugeln bei eingeschobenem Schrauber bzw. Bohrfutter einfallen, so daß letztere axial verrastet werden. Erst dann, wenn die Hülse gegen die Kraft der Feder vom Benutzer des Werkzeuges axial wieder verschoben wird, löst sich die genannte Verrastung und der Schrauber bzw. das Bohrfutter können wieder aus der Mitnahmeöffnung entnommen werden.

Bei dem bekannten Werkzeug haben das vordere freie Ende der Antriebsspindel sowie die darauf verschiebbare Hülse einen nur unwesentlich größeren Durchmesser als das Schrauberprofilstück bzw. der Schaft des Bohrfutters. Dies liegt daran, daß im Schrauberbetrieb ein relativ kleiner Durchmesser der stirnseitigen Elemente des Gesamtwerkzeuges gewünscht wird.

Während aber das Verrasten und vor allem das Entrasten eines Schrauberprofilstücks im wesentlichen unproblematisch ist, weil die Hülse bei eingesetztem Schrauberprofilstück frei zugänglich ist, ist das bekannte Werkzeug mit Nachteilen behaftet, wenn ein Bohrfutter wieder entrastet werden soll. Ein Bohrfutter hat nämlich einen wesentlich größeren Durchmesser als eine Antriebsspindel bzw. die darauf verschiebbare Hülse. Wenn nun ein Bohrfutter in den Werkzeugkopf eingesteckt ist, besteht zwischen dem Werkzeugkopf und dem Bohrfutter ein Bereich wesentlich kleineren Durchmessers, der andererseits aber axial breit ausgebildet sein muß, damit ein Benutzer des Werkzeuges mit den Fingern dort hineingreifen und die Hülse zum Entrasten des Bohrfutters zurückschieben kann.

Eine solche Konstruktion ist nicht nur optisch unbefriedigend, sie ist auch mit Sicherheitsrisiken behaftet, weil ein Benutzer des Werkzeugs sich seine Finger verletzen kann, wenn er bei schnellem Wechsel zwischen Bohrfutter und Schraubereinsatz in den axial sehr schmalen Bereich zwischen Bohrfutter und Werkzeugkopf hineinfassen muß.

Der Erfindung liegt daher die Aufgabe zugrunde, ein Werkzeug der eingangs genannten Art dahingehend weiterzubilden, daß diese Nachteile vermieden werden und insbesondere eine erhöhte Sicherheit für den Benutzer derartiger Werkzeuge gegeben ist.

Diese Aufgabe wird bei einem Werkzeug der eingangs genannten Art erfindungsgemäß dadurch gelöst, daß an dem Bohrfutter Betätigungsmittel für den Mechanismus vorgesehen sind.

Die der Erfindung zugrundeliegende Aufgabe wird auf diese Weise vollkommen gelöst.

So ist es nämlich einerseits möglich, beim Einsetzen bzw. beim Entnehmen eines Schraubereinsatzes an den Rastmitteln selbst anzugreifen, beispielsweise einer axial verschiebbaren Hülse relativ kleinen Durchmessers, während andererseits bei aufgestecktem Bohrfutter eine Fernsteuerung des Entrastmechanismus möglich ist, so daß der Benutzer des Werkzeuges nicht in den schmalen Bereich zwischen Werkzeugkopf und Bohrfutter eingreifen muß. Ein weiterer vorteilhafter Effekt ist, daß der Entrastmechanismus nicht so schnell verschmutzt.

Besonders bevorzugt ist, wenn in an sich bekannter Weise der Mechanismus eine Hülse umfaßt, die axial verschiebbar an der Antriebsspindel angeordnet ist und in unterschiedlichen axialen Stellungen radial verschiebbare Elemente in die Mitnahmeöffnung einfährt bzw. diese freigibt.

Dies gilt insbesondere dann, wenn die Hülse auf einem als Kugelkäfig ausgebildeten Abschnitt der Antriebsspindel verschiebbar ist und die radial verschiebbaren Elemente unter Federkraft stehende Kugeln des Kugelkäfigs sind.

Besonders bevorzugt ist ferner, wenn bei diesen Ausführungsbeispielen drei um 120° über einen Umfang der Antriebsspindel verteilte Elemente vorgesehen sind, und der Antriebsschaft an seinem Einführende als Flachkant ausgebildet und so schmal dimensioniert ist, daß er beim Einführen in die Mitnahmeöffnung nur an einem der Elemente in Anlage gerät.

Diese Maßnahme hat den Vorteil, daß beim Einführen des Antriebsschaftes nur eine minimale Ausweichbewegung der radial verschiebbaren Elemente erforderlich ist, weil nur eines dieser Elemente beaufschlagt wird, ehe dann der Antriebsschaft möglicherweise mit seinem vollen Umfang in die Mitnahmeöffnung eintritt und dann alle der mehreren radial verschiebbaren Elemente auslenkt. Auf diese Wiese wird erreicht, daß der Antriebsschaft zumindest über eine gewisse axiale Strecke ohne mechanisches Hindernis eingeführt werden kann und damit eine sichere Führung für die weitere Einschiebbewegung gegeben ist.

Bei besonders bevorzugten Ausführungsformen der Erfindung sind die Betätigungsmittel als Taste ausgebildet, die in eine Umfangsfläche des Bohrfutters angeordnet und in radialer Richtung betätigbar ist.

Diese Maßnahme hat den Vorteil, daß eine besonders einfache Betätigung möglich ist, weil der Benutzer des Werkzeugs in sehr einfacher Weise am Umfang des Bohrfutters radial auf die Taste drücken kann.

Eine gute Wirkung ergibt sich dabei, wenn die Taste um ein Gelenk in radialer Richtung einschwenkbar ist.

Diese Maßnahme hat eine besonders einfache Konstruktion zur Folge, insbesondere dann, wenn die Taste einstückig mit einem Kunststoffbauteil hergestellt und nur über ein Filmscharnier an dem übrigen Bauteil angelenkt ist.

Weiterhin ist bei diesem Ausführungsbeispiel bevorzugt, wenn die Taste an ihrem vom Gelenk abgewandten Ende mit einer radial verlaufenden Nase versehen ist, die sich beim Einschwenken der Taste mit einer axialen Bewegungskomponente bewegt.

Diese Maßnahme hat den besonderen Vorteil, daß eine in radialer Richtung wirkende Betätigung in eine in axialer Richtung wirkende Betätigung umgesetzt wird, so daß herkömmliche Verrastmechanismen von Werkzeugen der hier interessierenden Art eingesetzt werden können.

So ist besonders bevorzugt, wenn die Taste in einer Umfangsfläche eines topfförmigen Gehäuses angeordnet ist, das die Hülse bei in den Werkzeugkopf eingesetztem Bohrfutter allseits umschließt.

Diese Maßnahme hat den Vorteil, daß bei axial über den Werkzeugkopf vorstehender Antriebsspindel bzw. Rasthülse eine geschlossene Bauform entsteht, wenn sich das topfförmige Gehäuse über die Hülse und die von dieser eingeschlossene Antriebsspindel stülpt. Der Benutzer des Werkzeugs braucht dann lediglich in radialer Richtung auf die im topfförmigen Gehäuse angeordnete Taste zu drücken, um die vom Gehäuse eingeschlossene Hülse in axialer Richtung zu verschieben.

Bei einer Weiterbildung dieses Ausführungsbeispiels haben das Gehäuse und der Werkzeugkopf dabei näherungsweise den gleichen Durchmesser, so daß eine sowohl optisch wie auch praktisch befriedigende Lösung entsteht, bei der im Bereich des vorderen Endes des Werkzeugs keine größeren Durchmessersprünge und vor allem keine Bereiche zurückgesetzten Durchmessers vorhanden sind, an denen ein Benutzer des Werkzeugs mit den Fingern hängen bleiben könnte.

Schließlich ist besonders bevorzugt, wenn an zwei um 180° über die Umfangsfläche versetzten Positionen jeweils eine Taste angeordnet ist.

Diese Maßnahme hat den Vorteil, daß der Benutzer durch Eindrücken der beiden Tasten, beispielsweise mit Daumen und Zeigefinger, den Verrastmechanismus in äußerst einfacher Weise lösen kann.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine Seitenansicht, teilweise aufgeschnitten, durch ein Bohrfutter;
- Fig. 2: eine Draufsicht auf das in Fig. 1 dargestellte Bohrfutter;
- Fig. 3: eine Seitenansicht, teilweise aufgeschnitten, durch einen Werkzeugkopf, wie er in Kombination mit dem Bohrfutter der Fig. 1 und 2 verwendet werden kann;
- Fig. 4: eine ausschnittsweise Schnittdarstellung entlang der Linie IV-IV von Fig. 3, in vergrößertem Maßstab;
- Fig. 5: eine Darstellung, ähnlich Fig. 4, jedoch entlang der Linie V-V von Fig. 3.

Wenn im Rahmen der vorliegenden Anmeldung von einem motorisch betriebenen Werkzeug die Rede ist, so ist hierunter jedwedes elektrisch, pneumatisch oder sonstwie angetriebenes Werkzeug zu verstehen, unabhängig davon, ob das Werkzeug stationär oder als Handwerkzeug ausgebildet ist. Die Erfindung soll jedoch anhand der nachstehend erläuterten Ausführungsbeispiele anhand des Beispielsfalls einer elektrisch betriebenen Bohr- und Schraubmaschine erörtert werden, ohne daß dieser Einsatzfall den Rahmen der vorliegenden Erfindung einschränkt.

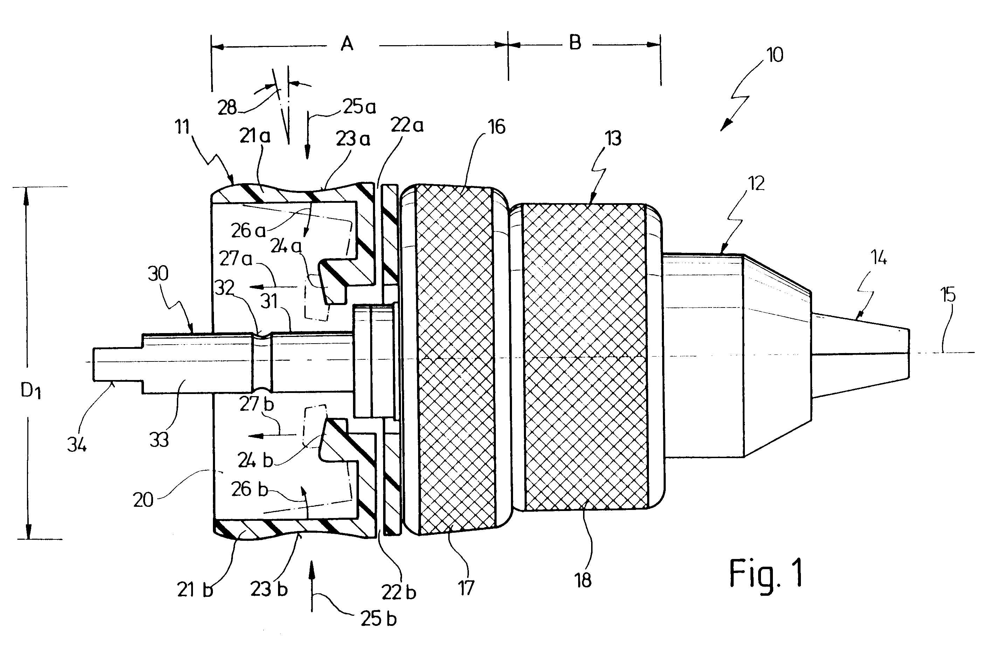

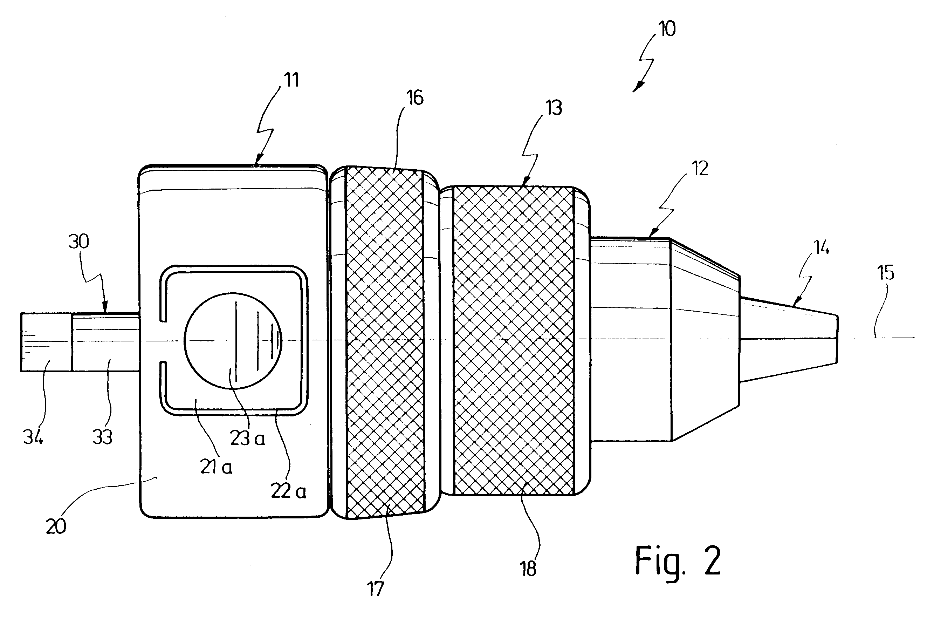

In Fig. 1 und 2 bezeichnet 10 insgesamt ein Bohrfutter für eine derartige Maschine. Das Bohrfutter 10 weist an seinem rückwärtigen Ende ein Gehäuse 11 auf, dessen Einzelheiten weiter unten noch erläutert werden. Am vorderen Ende des Bohrfutters 10 befindet sich ein üblicher Spannkopf 12 mit einem verdrehbaren Spannring 13, über den Spannbacken 14 geöffnet oder geschlossen werden können, um einen entlang einer Achse 15 einzuführenden Einsatz, beispielsweise einen Bohrer, zu spannen oder zu lösen. Ein Ring 16 ist starr mit dem Spannkopf 12 verbunden. Der Ring 16 und der Spannring 13 sind an ihrem Umfang jeweils mit einer Riffelung 17 bzw. 18 versehen, damit der Benutzer des Werkzeuges diese beiden Ringe 13, 16 beim Einspannen oder Ausspannen eines Bohrers oder dgl. gegeneinander verdrehen und das erforderliche Drehmoment aufbringen kann. Abgesehen vom Gehäuse 11 ist das Bohrfutter 10 im übrigen von herkömmlicher Bauart.

Das Gehäuse 11, das vorzugsweise einstückig aus einem elastischen Kunststoff hergestellt ist, weist einen hinteren, topfförmigen Abschnitt 20 auf. In eine äußere Umfangsfläche des hinteren Abschnitts 20 sind an zwei um 180° versetzten Positionen Tasten 21a bzw. 21b eingesetzt und zwar im dargestellten Ausführungsbeispiel in einstückiger Vereinigung mit dem Gehäuse 11. Hierzu sind die Tasten 21a, 21b bis auf einen schmalen Steg mittels je eines Schlitzes 22a, 22b vom übrigen hinteren Abschnitt 20 getrennt. In der Mitte der Tasten 21a, 21b ist eine Vertiefung 23a, 23b angebracht, damit der Benutzer des Werkzeuges die Tasten 21a, 21b ohne hinzusehen ertasten kann.

An das vom Steg abgewandte innere Ende der Tasten 21, 21b sind radial nach innen in den hinteren Abschnitt 20 hineinweisende Nasen 24a, 24b angeformt, die an ihrem freien Ende wieder axial zum Steg hin abgekröpft und dort in einer schrägen Endfläche versehen sind. Die schräge Endfläche bildet mit einer Radialebene zur Achse 15 einen Winkel 28 von vorzugsweise etwa 10°.

Wie aus Fig. 1 deutlich wird, ist es möglich, in Richtung von Pfeilen 25a, 25b in radialer Richtung auf die Tasten 21a, 21b zu drücken. Die Tasten 21a, 21b werden dann um das vom Steg gebildete Gelenk verschwenkt, wie mit Pfeilen 26a, 26b angedeutet. In der nun eingenommenen, in Fig. 1 strichpunktiert eingezeichneten Position wurden die Nasen 24a, 24b zwar radial nach innen eingeschwenkt, ihr hakenartiges inneres Ende hat jedoch gleichzeitig auch eine axiale Bewegungskomponente ausgeführt, wie mit Pfeilen 27a, 27b angedeutet.

Das Bohrfutter 10 ist an seinem rückwärtigen Ende ferner mit einem Schaft 30 versehen, der drehstarr mit dem Spannkopf 12 verbunden ist. Der axiale Schaft 30 weist, vom Ring 16 aus betrachtet, zunächst einen ersten zylindrischen Abschnitt 31, dann eine schmale Ringnut 32, dann einen zweiten zylindrischen Abschnitt 33 und schließlich einen am rückwärtigen Ende ausgebildeten Flachkant 34 auf. Der Flachkant 34 ist dadurch gebildet, daß der ansonsten zylindrische Abschnitt von oben und unten her kreissegmentförmig abgeflacht wurde.

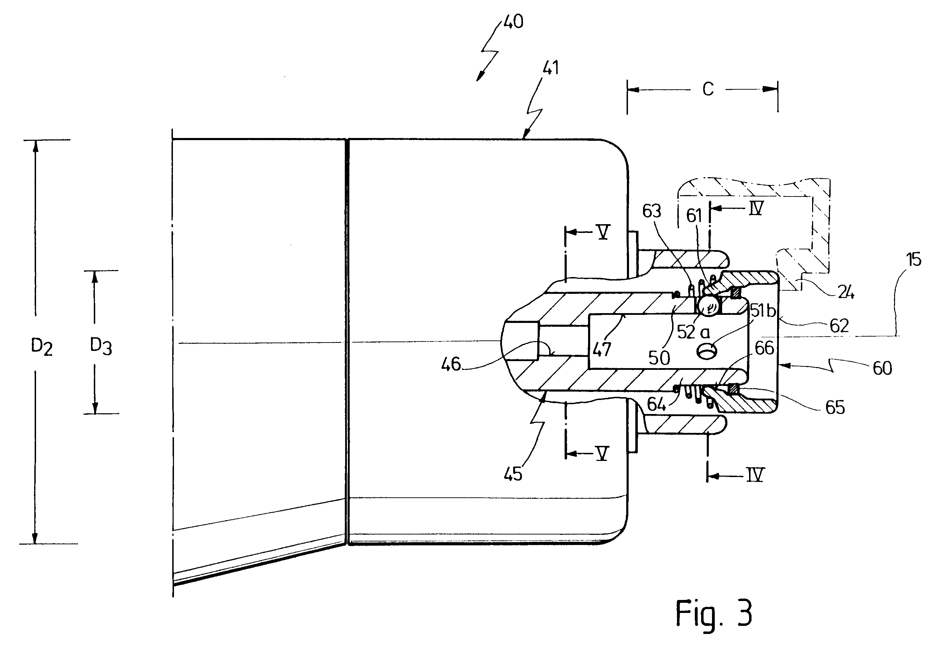

In Fig. 3 ist mit 40 insgesamt das Werkzeug bezeichnet, im dargestellten Beispielsfall also ein elektrisches Handwerkzeug. Das Werkzeug 40 ist an seinem vorderen Ende mit einem Werkzeugkopf 41 versehen. Innerhalb des Werkzeugkopfes 41 befindet sich in Richtung der Achse 15 eine hohle Antriebsspindel 45, die in nicht im einzelnen dargestellter Weise mit einem elektrischen Antriebsmotor verbunden ist.

Die Antriebsspindel 45 ist, in der Darstellung der Fig. 3 links, mit einem Flachkantabschnitt 46 versehen, dessen Innenkontur an die Außenkontur des Flachkants 34 angepaßt ist. In der Darstellung der Fig. 3 rechts schließt sich an den Flachkantabschnitt 46 ein Zylinderabschnitt 47 an.

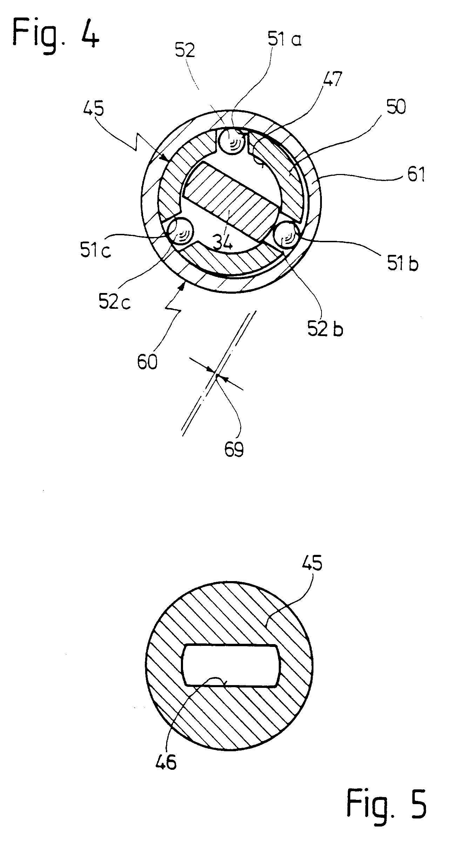

Im Bereich des Zylinderabschnitts 47 steht die Antriebsspindel 45 axial über den Werkzeugkopf 41 vor. Am vorderen Ende der Antriebsspindel 45, der über den Werkzeugkopf 41 vorsteht, ist diese als Kugelkäfig 50 ausgebildet, wie deutlich aus Fig. 3 und Fig. 4 erkennbar ist. Der Kugelkäfig 50 ist mit drei um 120° über den Umfang verteilt angeordneten Radialbohrungen 51a bis 51c versehen, in denen sich jeweils Kugeln 52a bis 52c befinden. Es versteht sich, daß die darstellende Fig. 4 nur schematisch zu verstehen ist und keine näheren konstruktiven Einzelheiten zeigt.

Auf das vordere Ende der Antriebsspindel 45 ist im Bereich des Kugelkäfigs 50 eine Hülse 60 als Rasthülse aufschiebbar. Die Hülse 60 ist an ihrem in Fig. 3 linken Ende mit einem hinteren Abschnitt 61 versehen, der in der in Fig. 3 dargestellten Stellung die Kugeln 52a bis 52c nach innen durch die Radialbohrungen 51a bis 51c drückt, so daß diese radial nach innen in den Zylinderabschnitt 47 vorstehen.

Das in Fig. 3 rechte Ende der Hülse 60 wird durch eine Vorderkante 62 gebildet. Eine konische Schraubenfeder 63 stützt sich einerseits an einer Ringschulter 64 der Antriebsspindel 45 und andererseits am hinteren Abschnitt 61 der Hülse 60 ab. Die Schraubenfeder 63 ist eine Druckfeder und drückt die Hülse 60 in der in Fig. 3 dargestellten Stellung nach rechts gegen einen Sprengring 65, der axial starr mit der Antriebsspindel 45 verbunden ist.

In der Darstellung der Fig. 3 ist die Hülse 60 links von dem Sprengring 65 auf ihrer Innenseite mit einer konischen Aufweitung 66 versehen. Wird nun die Hülse 60 aus der in Fig. 3 dargestellten rechten Endstellung gegen die Kraft der Schraubenfeder 63 nach links verschoben, so können die Kugeln 52a bis 52c durch die Radialbohrungen 51a bis 51c nach außen wandern, weil sie nun aufgrund der konischen Aufweitung 66 der Hülse 60 nicht mehr auf ihrem radialen Weg nach außen gesperrt sind.

Die Anordnung der Hülse 60 auf dem vorderen Ende der Antriebsspindel 45 ist ferner so gewählt, daß die Hülse 60 mit geringfügigem radialen Spiel gelagert ist.

Wenn nun ein kurzes Schrauberprofilstück in die durch die Abschnitte 46 und 47 der Antriebsspindel 45 gebildete Mitnahmeöffnung eingeführt werden soll, so kann dies in herkömmlicher Weise geschehen, indem die frei zugängliche Hülse 60 mit der einen Hand in Fig. 3 nach links verschoben wird, so daß mit der anderen Hand das Schrauberprofilstück in den Zylinderabschnitt 47 eingeführt werden kann. Die Hülse 60 kann dann losgelassen werden, mit der Folge, daß die Kugeln 52a bis 52c in eine entsprechende Ringnut des Schrauberprofilstücks einfallen.

Zum Herausnehmen des Schrauberprofilstücks kann nun wiederum die immer noch frei zugängliche Hülse 60 wieder nach links verschoben werden, um die Verrastung mittels der Kugeln 52a bis 52 c zu lösen.

Wenn nun jedoch ein Bohrfutter eingespannt werden soll, so wird mit der erfindungsgemäßen Anordnung des Bohrfutters gemäß den Fig. 1 und 2 folgendes erreicht.

Zunächst ist zu beachten, daß der Flachkant 34 am rückwärtigen Ende des Schaftes 30 so dimensioniert ist, daß er beim Einführen in den Zylinderabschnitt 47 nur in Anlage an eine der Kugeln gerät, nämlich beispielsweise in Anlage an die Kugel 52b, wie in Fig. 4 dargestellt. Hierzu muß der Flachkant 34 nur so schmal ausgebildet werden, daß er, wie Fig. 4 deutlich zeigt, in jeder denkbaren Drehstellung immer nur an einer der drei Kugeln 51a bis 51c angreift.

In diesem Falle weicht auch nur die eine Kugel, in Fig. 4 die Kugel 52b, radial aus. Da jedoch die Hülse 60, wie oben erwähnt, im Bereich ihres hinteren Abschnitts 61 mit geringem radialen Spiel gelagert ist, kann die Kugel 52b ausweichen, weil der hintere Abschnitt 61 sich in eine geringfügige Exzentrizität 69 zum Kugelkäfig 50 bewegen kann, wie in Fig. 4 im einzelnen eingezeichnet.

Dies bedeutet, daß, solange nur der Flachkant 34 in die Mitnahmeöffnung der Antriebsspindel 45 eingeführt wird, der Rastmechanismus der Elemente 50 bis 52 nicht wirksam wird. Auf diese Weise kann der Schaft 30 über eine beträchtliche axiale Länge in den Zylinderabschnitt 47 eingeführt werden, ohne daß auf die Rastmittel Rücksicht genommen werden muß.

Wie man nun aus der strichpunktierten Darstellung in Fig. 3 erkennen kann, liegen im eingesetzten Zustand des Bohrfutters 10 die Nasen 24 an der Vorderkante 62 der Hülse 60 an. Wenn nun, wie in Fig. 1 dargestellt, die Tasten 21a, 21b in radialer Richtung betätigt werden, wie mit Pfeilen 25a, 25b angedeutet, so entsteht die bereits erwähnte axiale Bewegungskomponente in Richtung der Pfeile 27a, 27b, mit der Folge, daß die Hülse 60 nach links verschoben wird und die Kugeln 52a bis 52c wieder freigegeben werden.

Demzufolge kann nach dem Drücken einer oder beiden Tasten 21a, 21b die Verrastung durch die Kugeln 52a bis 52c wieder gelöst werden.

In Fig. 1 ist mit A der Bereich bezeichnet, an dem ein Benutzer das Bohrfutter 10 mit der einen Hand festhalten kann, während der Bereich B den Abschnitt bezeichnet, der mit der anderen Hand ergriffen werden muß, um beispielsweise einen Bohrer in den Spannbacken 14 ein- oder auszuspannen. Da bei herkömmlichen Bohrfuttern die Breite des in Fig. 1 linken Abschnittes A wesentlich schmaler, nämlich auf die Breite des Ringes 16 beschränkt ist, ergibt sich durch das Ansetzen des Gehäuses 11 ein axial größerer Bereich, der mit der Hand ergriffen werden kann, so daß die Handhabung verbessert wird.

Mit D₁ ist in Fig. 1 der Außendurchmesser des Bohrfutters 10 in den Bereichen A und B, insbesondere im Bereich des Gehäuses 11 bezeichnet.

Demgegenüber bezeichnet D₂ in Fig. 3 den Außendurchmesser des Werkzeugkopfes 41 und D₃ den Außendurchmesser der Hülse 60.

Man erkennt deutlich, daß ohne das Gehäuse 11 zwischen dem Werkzeugkopf 41 und dem Ring 16 ein Bereich, der in Fig. 3 mit C angedeutet ist, entstehen würde, in dem der Durchmesser D₃ wesentlich kleiner ist als die angrenzenden Durchmesser D₁ und D₂ von Bohrfutter 10 und Werkzeugkopf 41.

Demgegenüber wird durch das Vorsehen des Gehäuses 11 erreicht, daß der Durchmesser von D₂ nach D₁ nur geringfügig zurückgeht, ohne daß Lücken in Bereichen eines verringerten Durchmessers entstehen. Die Erfindung ist daher in besonderem Maße bei solchen Werkzeugen 40 einsetzbar, bei denen Elemente mit kleinerem Durchmesser D₃ um einen Betrag C über den Werkzeugkopf 41 vorstehen.

## Patentansprüche

1. Motorisch betriebenes Werkzeug mit einem um eine Achse (15) rotierenden Bohrfutter (10) mit einem eine Antriebsspindel (45) enthaltenden Werkzeugkopf (41), wobei die Antriebsspindel (45) eine Mitnahmeöffnung (46, 47) für einen Antriebsschaft (30) des Werkzeugeinsatzes sowie Rastmittel (32, 50 bis 66) zum axialen Verrasten des Antriebsschaftes (30) in der Mitnahmeöffnung (46, 47) aufweist, die beim Einführen des Antriebsschaftes (30) in die Mitnahmeöffnung (46, 47) vorzugsweise selbsttätig verrasten und mittels eines Mechanismus (60 bis 66) lösbar sind, dadurch gekennzeichnet, daß an dem Bohrfutter (10) Betätigungsmittel (21, 24) für den Mechanismus (60 bis 66) vorgesehen sind.

2. Werkzeug nach Anspruch 1, dadurch gekennzeichnet, daß der Mechanismus (60 bis 66) eine Hülse (60) umfaßt, die axial verschiebbar an der Antriebsspindel (45) angeordnet ist und in unterschiedlichen axialen Stellungen radial verschiebbare Elemente in die Mitnahmeöffnung (47) einfährt bzw. diese freigibt.

3. Werkzeug nach Anspruch 2, dadurch gekennzeichnet, daß die Hülse (60) auf einem als Kugelkäfig (50) ausgebildeten Abschnitt der Antriebsspindel (45) verschiebbar ist, und daß die radial verschiebbaren Elemente unter Federkraft stehende Kugeln (51a bis 51c) des Kugelkäfigs (50) sind.

4. Werkzeug nach Anspruch 2 oder 3, dadurch gekennzeichnet, daß drei um 120° über einen Umfang der Antriebsspindel verteilte Elemente vorgesehen sind, und daß der Antriebsschaft (30) an seinem Einführende als Flachkant (34) ausgebildet und so schmal dimensioniert ist, daß er beim Einführen in die Mitnahmeöffnung (46) nur an einem der Elemente in Anlage gerät.

5. Werkzeug nach einem oder mehreren der Ansprüche 1 bis 4, dadurch gekennzeichnet, daß die Betätigungsmittel als Taste (21) ausgebildet sind, die in einer Umfangsfläche des Bohrfutters (10) angeordnet und in radialer Richtung betätigbar ist.

6. Werkzeug nach Anspruch 5, dadurch gekennzeichnet, daß die Taste (21) um ein Gelenk in radialer Richtung einschwenkbar ist.

7. Werkzeug nach Anspruch 6, dadurch gekennzeichnet, daß die Taste (21) an ihrem vom Gelenk abgewandten Ende mit einer radial verlaufenden Nase (24) versehen ist, die sich beim Einschwenken der Taste (21) mit einer axialen Bewegungskomponente bewegt.

8. Werkzeug nach Anspruch 2 und 7, dadurch gekennzeichnet, daß die Taste (21) in einer Umfangsfläche eines topfförmigen Gehäuses (11) angeordnet ist, daß die Hülse (60) bei in den Werkzeugkopf (41) eingesetztem Bohrfutter (10) allseits umschließt.

9. Werkzeug nach Anspruch 8, dadurch gekennzeichnet, daß das Gehäuse (11) und der Werkzeugkopf (41) näherungsweise den gleichen Durchmesser (D₁, D₂) haben.

10. Werkzeug nach einem oder mehreren der Ansprüche 5 bis 9, dadurch gekennzeichnet, daß an zwei um 180° über die Umfangsfläche versetzten Positionen jeweils eine Taste (21a, 21b) angeordnet ist.

## Claims

1. Motor-driven tool with a drill chuck (10) rotating around an axle (15) with a tool-holder (41) containing a drive spindle (45), with the drive spindle (45) including an engagement aperture (46, 47) to accommodate a drive shank (30) of the tool insert and latching means (32, 50 to 66) to latch the drive shank (30) axially in the engagement aperture (46, 47) which preferably latch automatically as the drive shank (30) is introduced into the engagement aperture (46, 47), and which may be released by means of a mechanism (60 to 66), characterized in that means (21, 24) are provided on the drill chuck (10) to actuate the mechanism (60 to 66).

2. Tool according to claim 1, characterized in that the mechanism (60 to 66) comprises a sleeve (60) which is mounted such as to allow axial displacement on the drive spindle (45) and, in different axially displaced positions, drives into the engagement aperture (47) or releases radially displaceable elements.

3. Tool according to claim 2, characterized in that the sleeve (60) may be moved on a section of the drive spindle (45) taking the form of a ball cage (50) and in that the elements which may be shifted radially take the form of spring-loaded balls (51a to 51c) of the ball cage (50).

4. Tool according to claim 2 or claim 3, characterized in that three elements are provided distributed at intervals of 120° around the circumference of the drive spindle, and in that the drive shank (30) is formed as a flat edge (34) and is of such narrow dimension that it contacts only one of the elements on introduction into the engagement aperture (46).

5. Tool according to one or more of claims 1 to 4, characterized in that the actuating element takes the form of a button (21) located in one circumferential surface of the drill chuck (10) and it being possible to move this in the radial direction.

6. Tool according to claim 5, characterized in that the button (21) is hinged in the radial direction.

7. Tool according to claim 6, characterized in that the button (21) is provided with a projection running radially on its end away from the hinge which moves with an axial component of motion when the button (21) hinges in.

8. Tool according to claim 2 and claim 7, characterized in that the button (21) is located in one circumferential surface of a pot-shaped housing (11), in that the sleeve (60) encloses on all sides the drill chuck (10) inserted in the tool holder (41).

9. Tool according to claim 8, characterized in that the housing (11) and the tool holder (41) have approximately the same diameter (D₁, D₂).

10. Tool according to one or more of claims 5 to 9, characterized in that a button (21a, 21b) is arranged at two positions on the circumferential surface disposed at 180° to one another.

## Revendications

1. Outil entraîné par un moteur comportant un mandrin porte-foret (10), tournant autour d'un axe (15), avec une tête d'outil (41), contenant une broche d'entraînement (35), la broche d'entraînement (45) présentant une ouverture d'entraînement (46, 47) pour une tige d'entraînement (30) de l'accessoire d'outil ainsi que des moyens d'encliquetage (32, 50 à 66) pour le verrouillage axial de la tige d'entraînement (30), dans l'ouverture d'entraînement (46, 47), lesquels moyens d'encliquetage s'accrochent, de préférence automatiquement, dans l'ouverture d'entraînement (46, 47), lors de l'introduction de la tige d'entraînement (30) et peuvent être déverrouillés au moyen d'un mécanisme (60 à 66), caractérisé en ce que des moyens d'actionnement (21, 24) sont prévus pour le mécanisme (60 à 66) sur le mandrin porte-foret (10).

2. Outil selon la revendication 1, caractérisé en ce que le mécanisme (60 à 66) comprend un manchon (60), qui coulisse axialement sur la broche d'entraînement (45) et qui, dans différentes positions axiales, insère des éléments coulissant radialement dans l'ouverture d'entraînement (47), ou bien les libère.

3. Outil selon la revendication 2, caractérisé en ce que le manchon (60) peut coulisser sur une portion de la broche d'entraînement (45), conçue à la manière d'une cage à billes (50), et en ce que les éléments coulissant radialement sont des billes (51a à 51c) de la cage à billes (50), soumises à la force d'un ressort.

4. Outil selon l'une des revendications 2 ou 3, caractérisé en ce qu'il est prévu trois éléments répartis à 120° sur la périphérie de la broche d'entraînement, et en ce que la tige d'entraînement (30) est réalisée, à son extrémité d'introduction, sous la forme d'un bout aplati (34) et a des dimensions si étroites que, lors de l'introduction dans l'ouverture d'entraînement (46), elle ne vient s'appliquer que contre l'un des éléments.

5. Outil selon une ou plusieurs des revendications 1 à 4, caractérisé en ce que les moyens d'actionnement sont une touche (21), qui est disposée dans une surface périphérique du mandrin porte-foret (10) et peut être actionnée radialement.

6. Outil selon la revendication 5, caractérisé en ce que la touche (21) peut pivoter autour d'une articulation, dans la direction radiale.

7. Outil selon la revendication 6, caractérisé en ce que la touche (21) est pourvue, à son extrémité opposée à l'articulation, d'un ergot (24) s'étendant radialement, qui se déplace avec une composante de mouvement axial, lors du pivotement vers l'intérieur de la touche (21).

8. Outil selon les revendications 2 et 7, caractérisé en ce que la touche (21) est située dans une surface périphérique d'un boîtier (11) en forme de pot, qui entoure le manchon (60) de tous côtés, lorsque le mandrin porte-foret (10) est inséré dans la tête d'outil (41).

9. Outil selon la revendication 8, caractérisé en ce que le boîtier (11) et la tête d'outil (41) ont à peu près le même diamètre (D₁, D₂).

10. Outil selon une ou plusieurs des revendications 5 à 9, caractérisé en ce que, dans deux positions, décalées de 180° sur la surface périphérique, il est prévu une touche (21a, 21b).
